# DEMANDE DE BREVET EUROPEEN

(11) **EP 4 521 440 A1**
(43) Date de publication de la demande: **12.03.2025**
(21) Numéro de dépôt: 24198833.6
(22) Date de dépôt: 06.09.2024
(51) Int. Cl.: H01H 31/28, H01H 1/50, H01H 31/30, H01H 1/42

(54) **DISPOSITIF DE COMMUTATION ÉLECTRIQUE POUR VÉHICULE FERROVIAIRE ET VÉHICULE FERROVIAIRE COMPORTANT UN TEL DISPOSITIF**

(30) Priorité: 08.09.2023 FR 2309468
(71) Demandeur: ALSTOM Holdings, 93400 Saint-Ouen-sur-Seine (FR)
(72) Inventeur: TAINE, Antoine, 65600 SEMEAC (FR); GARCIA, John, 65350 THUY (FR); DUFFAU, Laurent, 65300 LANNEMEZAN (FR)
(74) Mandataire: Lavoix

(57) **Abrégé**

Ce dispositif de commutation (100) pour véhicule ferroviaire (10) comprend deux connecteurs (110, 120) configurés pour être connectés l'un à l'autre dans une configuration engagée. Un des connecteurs est fixe par rapport à une embase (102), l'autre connecteur étant porté par un support (140). Le support est mobile en rotation par rapport à l'embase autour d'un axe principal (Z140) et mobile en translation par rapport à l'embase le long de l'axe principal, la rotation et la translation du support étant commandées par un organe de commande (160). Lorsque les deuxconnecteurs sont en configuration engagée, le support est déplaçable en translation par rapport à l'embase parallèlement à l'axe principal, entre la position engagée et une position de verrouillage, dans laquelle la rotation du support est empêchée, et une force de contact entre les deuxconnecteurs est supérieure à une force de contact entre les deuxconnecteurs en position engagée.

## Description

L'invention concerne un dispositif de commutation électrique pour véhicule ferroviaire, ainsi qu'un véhicule ferroviaire comportant un tel dispositif.

De manière courante, un dispositif de commutation électrique pour véhicule ferroviaire comprend un ou plusieurs connecteurs fixes, formant chacun un réceptacle, et un ou plusieurs connecteurs mobiles, chacun associé à un connecteur fixe respectif et reçu dans le réceptacle correspondant. Des dispositifs de connexion comprenant des couteaux montés sur un support rotatif et pincés entre deux lames ressort sont couramment utilisés car présentent une structure simple et robuste.

La qualité de la connexion électrique entre un connecteur fixe et le connecteur mobile associé dépend notamment de la pression de contact entre ces deux connecteurs. Or, les courants circulants au travers de ces deux connecteurs ont des effets électrodynamiques qui tendent à réduire la pression de contact. Les lames ressorts sont ainsi conçues pour pincer les couteaux, de manière à assurer une pression de contact importante entre les couteaux et les lames correspondant.

US-2016/0329176-A1 décrit, par exemple, un dispositif de commutation comprenant des couteaux métalliques portés par un support rotatif. Chaque réceptacle est formé par deux lames ressorts, qui sont positionnées en regard l'une de l'autre et qui forment une pince, chaque couteau étant pincé entre les deux lames. Typiquement, la pénétration ou l'extraction des couteaux dans les pinces demande d'appliquer, au niveau du support rotatif, un couple de l'ordre de 30 à 50 Nm - Newton mètre -.

Un effort de pincement élevé a comme conséquence d'augmenter les efforts nécessaires à l'insertion des couteaux dans le réceptacle correspondant, ce qui demande d'augmenter une force d'actionnement en rotation du support des couteaux et de renforcer la structure du support rotatif et/ou d'un organe de commande actionnant la rotation du support rotatif, ce qui entraine une augmentation des coûts et/ou des masses de ces éléments, ce qui n'est pas désirable.

C'est à ces problèmes qu'entend plus particulièrement remédier l'invention, en proposant un dispositif de connexion amélioré, avec une structure simple et offrant une connexion électrique facile à établir et de bonne qualité.

À cet effet, l'invention concerne un dispositif de commutation pour un véhicule ferroviaire, le dispositif de commutation comprenant :
- un premier connecteur, qui comprend deux guides agencés en regard l'un de l'autre de part et d'autre d'un plan de connexion et ménageant un réceptacle qui s'étend selon le plan de connexion, et
- un deuxième connecteur, associé au premier connecteur et comprenant une portion de connexion, qui comprend deux faces de contact opposées s'étendant de part et d'autre d'un plan médian et qui est configurée pour être reçue dans le réceptacle dans une position engagée du deuxième connecteur, dans laquelle chaque face de contact est en regard d'un guide respectif et le plan médian est confondu avec le plan de connexion, le dispositif de commutation étant alors dans une configuration engagée,
- une embase, qui s'étend parallèlement au plan de connexion, et
- un support, qui est mobile en rotation par rapport à l'embase autour d'un axe principal orthogonal au plan de connexion,
- un organe de commande, configuré pour commander la rotation du support par rapport à l'embase,
dans lequel :
- le premier connecteur est porté par l'un des éléments choisis parmi l'embase et le support, tandis que le deuxième connecteur est porté par l'autre des éléments parmi le support et l'embase,
- le deuxième connecteur est déplaçable par rapport au premier connecteur selon un mouvement relatif d'engagement parallèle au plan de connexion, entre une position reculée, dans laquelle la portion de connexion est éloignée du réceptacle, et la position engagée.

Selon l'invention :
- le support est mobile en translation par rapport à l'embase le long de l'axe principal,
- l'organe de commande est configuré pour commander les mouvements de translation du support par rapport à l'embase,
- lorsque le deuxième connecteur est en position engagée, le support est déplaçable en translation par rapport à l'embase selon une direction de verrouillage parallèle à l'axe principal, entre la position engagée et une position de verrouillage, dans laquelle chaque face de contact est en regard d'un guide respectif et le plan médian est décalé par rapport au plan de connexion, le dispositif de connexion étant alors dans une configuration de verrouillage, et
- le deuxième connecteur est déformable élastiquement, de manière que, en position de verrouillage, une force de contact entre le premier connecteur et les faces de contact est supérieure à une force de contact entre le premier connecteur et les faces de contact en position engagée.

Grâce à l'invention, la pression de contact entre les premier et deuxième connecteurs est générée par déformation élastique du deuxième connecteur au cours du mouvement de translation du support, alors que le deuxième connecteur est déjà reçu dans le réceptacle. Autrement dit, au cours du mouvement de rotation du support, l'effort nécessaire pour insérer la portion de connexion dans le réceptacle est réduit, et la connexion entre les premier et deuxième connecteurs est facile à établir. La pression de contact entre les premier et deuxième connecteurs, générée par le mouvement de translation du support, contribue à la qualité de la connexion électrique.

Selon des aspects avantageux mais non obligatoires de l'invention, un tel dispositif de connexion peut incorporer une ou plusieurs des caractéristiques suivantes prises isolément ou selon toute combinaison techniquement admissible :
- Lorsque le deuxième connecteur est déplacé de sa position reculée vers sa position engagée, la force de contact entre le premier connecteur et le deuxième connecteur correspondant est nulle sur au moins une des faces de contact du deuxième connecteur.
- Lorsque le support est déplacé de sa position engagée vers sa position de verrouillage, les mouvements de rotation du support autour de l'axe principal sont empêchés.
- Lorsque le deuxième connecteur est dans une quelconque position intermédiaire entre les positions engagée et reculée, les mouvements de translation du deuxième connecteur par rapport au premier connecteur parallèlement à l'axe principal sont empêchés.
- Lorsque le support est en position reculée, le deuxième connecteur est déplaçable en translation par rapport au premier connecteur, selon une direction de blocage parallèle à la direction de verrouillage, entre la position reculée et une position de blocage, dans laquelle les mouvements de rotation du support autour de l'axe principal sont empêchés.
- La direction de blocage est orientée dans le même sens que la direction de verrouillage.
- Le dispositif de commutation comprend, en outre, un organe de rappel, qui génère un effort de rappel tendant à repousser le support selon la direction de verrouillage.
- L'effort de rappel est réglable, de manière à ajuster la force de contact entre chaque premier connecteur et le deuxième connecteur correspondant lorsque le dispositif de commutation est en configuration de verrouillage.

L'invention concerne aussi un véhicule ferroviaire comprenant une caisse et un dispositif de commutation tel que défini précédemment, dans lequel le dispositif de commutation est embarqué dans le véhicule ferroviaire.

Selon un autre aspect, l'invention concerne l'utilisation d'un dispositif de commutation tel que décrit précédemment, l'utilisation comprenant les étapes successives suivantes :
- alors que chaque deuxième connecteur est initialement éloigné du premier connecteur correspondant, faire pivoter le support autour de l'axe principal de manière à insérer chaque deuxième connecteur dans le réceptacle du premier connecteur correspondant, chaque deuxième connecteur étant alors en position engagée,
- ensuite, déplacer le support en translation le long de l'axe principal, de manière à déformer élastiquement chaque deuxième connecteur et à augmenter une pression de contact entre chaque deuxième connecteur et le premier connecteur correspondant.

Cette utilisation induit les mêmes avantages que ceux mentionnés ci-dessus au sujet du dispositif de commutation de l'invention.

L'invention sera mieux comprise, et d'autres avantages de celle-ci apparaîtront plus clairement à la lumière de la description qui va suivre, de deux modes de réalisation d'un dispositif de commutation, d'un véhicule ferroviaire et de l'utilisation d'un tel dispositif de commutation, conformes à son principe, donnée uniquement à titre d'exemple et faite en référence aux dessins annexés, dans lesquels :
- [Fig 1] la figure 1 est une vue de dessus d'un véhicule ferroviaire selon l'invention, comprenant un dispositif de commutation conforme à un premier mode de réalisation de l'invention ;
- [Fig 2] la figure 2 est une perspective du dispositif de commutation de la figure 1 ;
- [Fig 3] la figure 3 représente de manière schématique, sur deux inserts A) et B), des détails du dispositif de commutation de la figure 2, représentés respectivement dans une première configuration dite « de blocage » ;
- [Fig 4] la figure 4 représente de manière schématique, sur deux inserts A) et B), les détails du dispositif de commutation de la figure 3, représentés respectivement dans une deuxième configuration dite « reculée » ;
- [Fig 5] la figure 5 représente de manière schématique, sur deux inserts A) et B), les détails du dispositif de commutation des figure 3 et 4, représentés respectivement dans une troisième configuration dite « intermédiaire » ;
- [Fig 6] la figure 6 représente de manière schématique, sur deux inserts A) et B), les détails du dispositif de commutation des figures 3 à 5, représentés respectivement dans une quatrième configuration dite « engagée » ;
- [Fig 7] la figure 7 représente de manière schématique, sur deux inserts A) et B), les détails du dispositif de commutation des figures 3 à 6, représentés respectivement dans une cinquième configuration dite « de verrouillage » ; et
- [Fig 8] la figure 8 est une perspective d'un dispositif de commutation conforme à un deuxième mode de réalisation de l'invention.

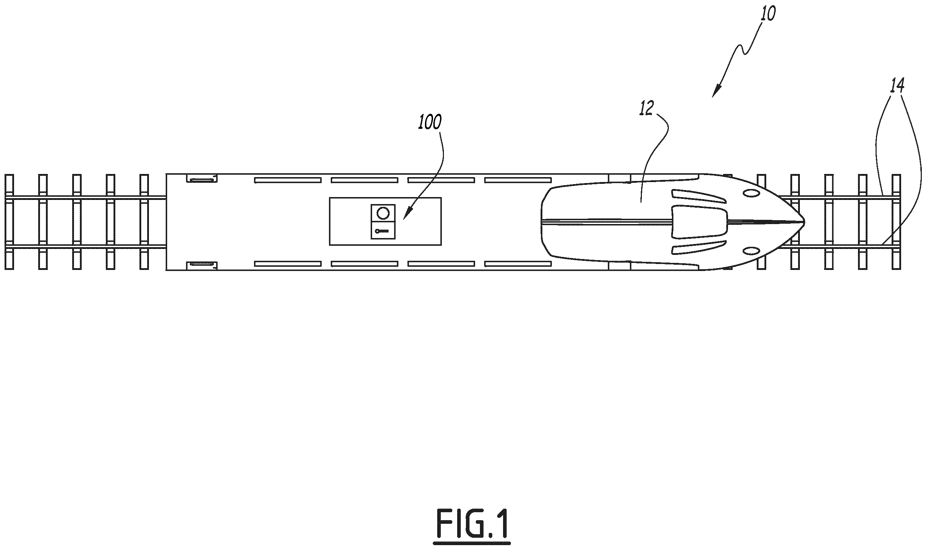

La figure 1 représente un véhicule ferroviaire 10. Le véhicule ferroviaire 10 comprend une caisse 12 et circule sur une voie ferrée, comprenant des rails 14. Les rails 14 sont ici rectilignes et horizontaux. Le véhicule ferroviaire 10 se déplace sur la voie ferrée au moyen d'un ou plusieurs moteurs électriques portés par la caisse 12. Le ou les moteurs ne sont pas représentés. L'énergie électrique est par exemple captée depuis un fil de contact suspendu au-dessus des rails 14. Le fil de contact n'est pas représenté.

Pour la distribution et le traitement de l'énergie électrique, le véhicule ferroviaire 10 comprend un dispositif de commutation 100, qui est ici porté par la caisse 12 ; autrement dit le dispositif de commutation 100 est préférentiellement embarqué sur le véhicule ferroviaire 10. Le dispositif de commutation 100 est ici placé sur le toit de la caisse 12. D'autres configurations sont bien entendu possibles ; par exemple le dispositif de commutation 100 est placé à l'intérieur de la caisse 12, de préférence dans un compartiment haute tension. Le dispositif de commutation 100 sert, par exemple, lors d'opérations de maintenance à mettre à la terre d'autres équipements électriques du véhicule ferroviaire 10.

Selon une autre variante non représentée, le dispositif de commutation 100 est utilisé dans une installation ferroviaire stationnaire, par exemple dans une sous-station d'alimentation.

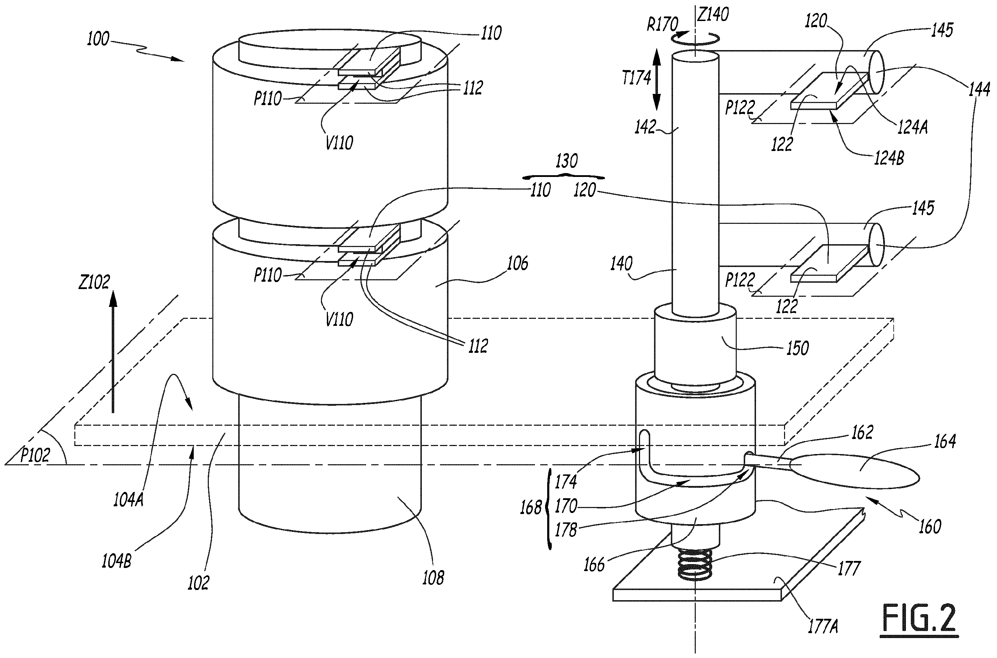

On décrit à présent le dispositif de commutation 100 à l'aide des figures 2 à 7.

Le dispositif de commutation 100 comprend une embase 102. L'embase 102 est ici réalisée dans une plaque et s'étend selon un plan d'embase P102. En utilisation, l'embase 102, considérée comme rigide et indéformable, est portée par la caisse 12. L'embase 102 comprend une face supérieure 104A, ici orientée vers le haut, et une face inférieure 104B opposée de la face supérieure 104A. Par commodité, on définit une direction de hauteur Z102 comme étant une direction orthogonale à la face supérieure 104A et orientée dans le même sens que la face supérieure 104A.

Pour la clarté du dessin, l'embase 102 est représentée en pointillés et transparente sur la figure 2.

Le dispositif de commutation 100 comprend un premier appareil électrique 106, qui est fixé à l'embase 102. Le premier appareil électrique 106 est ici un disjoncteur, qui est agencé du côté de la face supérieure 104A et qui présente une forme globalement cylindrique de section circulaire s'étendant selon un axe parallèle à la direction de hauteur Z102.

Le premier appareil électrique 106 comprend ici un organe de commande, qui sert à piloter l'appareil électrique 106 et qui est représenté par un boitier de commande 108 situé du côté de la face inférieure 104B.

Le premier appareil électrique 106 comprend des premiers connecteurs 110, ici au nombre de deux. Les premiers connecteurs 110 sont fixés au reste de l'appareil électrique 106, lui-même fixé à l'embase 102. Les premiers connecteurs 110 sont ainsi portés par l'embase 102 et sont considérés comme immobiles par rapport à l'embase 102.

Le dispositif de commutation 100 comprend aussi des deuxièmes connecteurs 120, chaque premier connecteur 110 est configuré pour être connecté électriquement à un deuxième connecteur 120 respectif. Chaque premier connecteur 110 et le deuxième connecteur 120 associé forment ensemble une paire 130 de connecteurs. Dans l'exemple illustré, le dispositif de commutation 100 comprend deux deuxièmes connecteurs 120, et donc deux paires 130 de connecteurs.

Le dispositif de commutation 100 comprend aussi un support 140, qui porte les deuxièmes connecteurs 120. Le support 140 est mobile par rapport à l'embase 102, de manière à connecter ou déconnecter les premier et deuxième connecteurs 110 et 120 de chaque paire 130 de connecteurs.

Les premiers connecteurs 110 fonctionnent de manière similaire l'un par rapport à l'autre et sont de préférence identiques l'un à l'autre. De même, les deuxième connecteurs 120 fonctionnent de manière similaire l'un par rapport à l'autre et sont de préférence identiques l'un à l'autre. Dans la suite, on décrit le fonctionnement du premier connecteur 110 et du deuxième connecteur 120 situés sur le haut de la figure 2.

Le premier connecteur 110 comprend deux guides 112 agencés en regard l'un de l'autre et de part et d'autre d'un plan de connexion P110, qui est parallèle au plan d'embase P102. Les deux guides 112 sont réalisés en un matériau électriquement conducteur, de préférence un métal, tel que le cuivre ou un de ses alliages, et ménagent entre eux un réceptacle V110, autrement dit un volume de réception, qui s'étend selon le plan de connexion P110.

Le deuxième connecteur 120 est ménagé dans une plaque d'un matériau électriquement conducteur, de préférence un métal, tel que le cuivre ou un de ses alliages. Le deuxième connecteur 120 présente ici une forme de lame parallélépipédique de forme allongée, qui est fixée par une première extrémité au support 140, et dont une deuxième extrémité, opposée à la première extrémité, forme une portion de connexion 122 du deuxième connecteur 120. Chaque portion de connexion 122 est configurée pour être reçue dans le réceptacle V110 du premier connecteur 110 correspondant, qui appartient à la même paire de connecteurs 130.

Chaque portion de connexion 122 comprend deux faces de contact 124A et 124B opposées, qui s'étendent de part et d'autre d'un plan médian P122. Lorsque la portion de connexion 122 est reçue dans le réceptacle V110 correspondant et que le plan médian P122 est confondu avec le plan de connexion P110, le deuxième connecteur 120 est dans une position dite « engagée ». Chaque face de contact 124A ou 124B est alors en regard d'un guide 112 respectif. Le dispositif de connexion 100 est alors dans une configuration dite « engagée ».

Le premier connecteur 110 est électriquement connecté avec le deuxième connecteur 120 correspondant lorsque le dispositif de connexion 100 est en configuration engagée et qu'un contact physique existe entre l'une des faces de contact 124A ou 124B et le guide 112 en regard. On comprend que la qualité de la connexion électrique entre le premier connecteur 110 et le deuxième connecteur 120 correspondant dépend notamment de l'étendue d'une surface de contact et d'une force de contact entre les faces de contact 124A ou 124B et les guides 112, plus la surface et la force de contact étant élevées, meilleure étant la connexion électrique.

Dans le premier mode de réalisation, le support 140 présente une forme de « F », et comprend une portion de guidage 142, par laquelle le support 140 est reliée à l'embase 102, et une portion de support 144, qui porte les deuxièmes connecteurs 120.

La portion de guidage 142 présente ici une forme allongée s'étendant selon un axe principal Z140 parallèle à la direction de hauteur Z102, tandis que la portion de support 144 comprend ici deux branches 145, qui s'étendent radialement à l'axe principal Z140. Les deux branches 145 sont donc parallèles au plan d'embase P102. Les branches 145 sont chacune de forme allongée et parallèles entre elles, chacune des branches 145 étant reliée par une première extrémité à la portion de guidage 142 et portant, à une deuxième extrémité opposée à la première extrémité, un deuxième connecteur 120.

D'autres formes du support 140 sont bien entendu possibles.

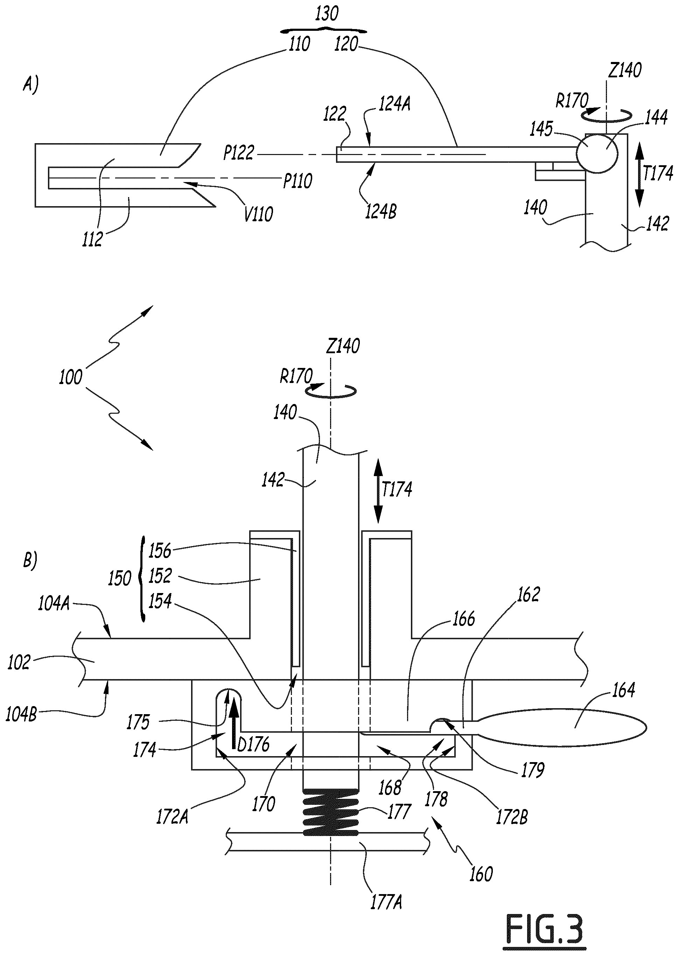

La portion de guidage 142 est reliée à l'embase 102 par un palier 150, qui assure une liaison cinématique de type pivot-glissant autour de l'axe principal Z140. Le palier 150, qui est représenté en coupe sur les figures 3 à 7, est ici réalisé par un tube 152, ménagé sur l'embase 102 autour d'un orifice 154 traversé par la portion de guidage 142.

Ainsi, le support 140 est à la fois mobile en rotation par rapport à l'embase 102 autour de l'axe principal Z140 et mobile en translation par rapport à l'embase 102 parallèlement à l'axe principal Z140. Le palier 150 comprend ici un coussinet 156, réalisé par exemple en bronze fritté, pour réduire les frottements entre le support 140 et le palier 150.

Les mouvements du support 140 sont commandés par un organe de commande 160. Dans le premier mode de réalisation, l'organe de commande 160 est un actionneur manuel, c'est-à-dire actionné à la main par un opérateur. L'organe de commande 160 est préférentiellement situé, par rapport à l'embase 102, du côté opposé des premiers et deuxièmes connecteurs 110 et 120, soit ici du côté de la face inférieure 104B. L'organe de commande 160 est ainsi situé du même côté de l'embase 102 que le boitier de commande 108.

L'organe de commande 160 comprend une tige 162 avec deux extrémités opposées. La tige 162 est fixée à la portion de guidage 142 par une première extrémité, tandis que la deuxième extrémité, opposée à la première extrémité, porte une poignée 164. La poignée 164 est destinée à être manipulée et déplacée par un opérateur. La tige 162 est ici agencée radialement à l'axe principal Z140. On considère que la tige 162, la poignée 164 et la portion de guidage 142 forment un sous-ensemble rigide et indéformable.

L'organe de commande 160 comprend aussi un manchon 166, qui est solidaire de l'embase 102, et qui présente ici une forme globalement cylindrique de section circulaire et d'axe aligné sur l'axe principal Z140. Le manchon 166 est traversé par la portion de guidage 142. Une lumière 168 est ménagée dans le manchon 166, cette lumière 168 étant configurée pour être traversée par la tige 162 et pour guider les déplacements de la tige 162.

La portion de guidage 142 est donc à la fois guidée par le palier 150 et par les mouvements de la tige 162 qui circule dans la lumière 168. Autrement dit, les mouvements de rotation de la portion de guidage 142 autour de l'axe principal Z140 et les mouvements de translation de la portion de guidage 142 le long de l'axe principal Z140 sont déterminés, aux jeux d'assemblage près, par la forme de la lumière 168. Par extension, les mouvements du support 140 par rapport au premier appareil électrique 106, ainsi que les mouvements relatifs de chaque deuxième connecteur 120 par rapport au premier connecteur 110 correspondant, sont déterminés par la forme de la lumière 168, autrement dit par l'organe de commande 160.

Comme représenté sur les figures 2 à 7, la lumière 168 présente une première portion 170, qui est ici rectiligne et est agencée radialement à l'axe principal Z140. La première portion 170 comprend deux extrémités opposées, avec une extrémité avant 172A et une extrémité arrière 172B. Sur les figures 2 à 7, l'extrémité avant 172A est située sur la gauche, tandis que l'extrémité arrière 172B est située sur la droite.

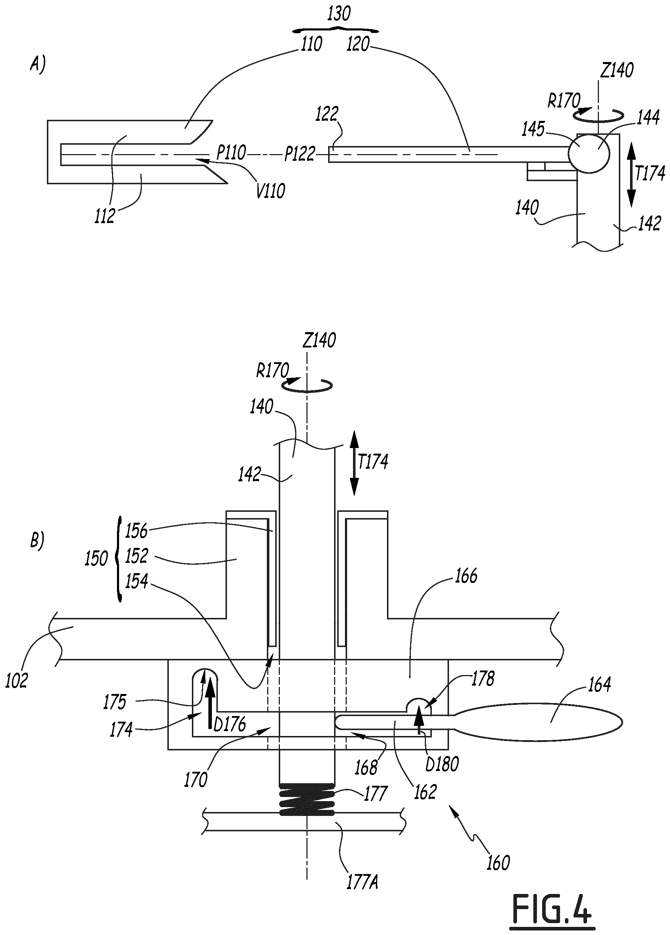

Le déplacement de la tige 162 dans la première portion 170 de l'extrémité arrière 172B vers l'extrémité avant 172A définit un mouvement d'engagement R170 de la tige 162, et donc du support 140. Le mouvement d'engagement R170 est illustré par l'enchainement des figures 4, 5 et 6. Le mouvement d'engagement R170 est ici un mouvement de rotation autour de l'axe principal Z140 et est représenté par une flèche en arc de cercle centrée sur l'axe principal Z140. Par extension, lorsque la tige 162 circule dans la première portion 170, chaque premier connecteur 110 se déplace par rapport au deuxième connecteur 120 correspondant selon le mouvement d'engagement R170.

La première portion 170 est agencée de manière que lorsque la tige 162 se rapproche de l'extrémité avant 172A au cours du mouvement d'engagement R170, chaque deuxième connecteur 120 s'insère dans le réceptacle V110 correspondant et passe en position engagée. Lorsque la tige 162 est en butée contre l'extrémité avant 172A, le dispositif de commutation 100 est dans une configuration dite engagée. Lorsque la tige 162 est en butée contre l'extrémité arrière 172B, la tige 162 est dans une position dite reculée, tandis que le dispositif de commutation 100 est dans une configuration dite reculée. Chaque portion de connexion 122 est alors éloignée du réceptacle V110 correspondant.

La première portion 170 est reliée, par l'extrémité avant 172A, à une deuxième portion de la lumière 168, cette deuxième portion étant dite lumière avant 174. La lumière avant 174 est ici rectiligne et agencée parallèlement à l'axe principal Z140. On comprend que lorsque la tige 162 circule dans la lumière avant 174 de la lumière 168, le mouvement de la portion de guidage 142 est un mouvement de translation T174 le long de l'axe principal Z140. Ce mouvement de translation T174 est représenté par une double flèche rectiligne. Il s'agit également d'un mouvement de translation du support 140 par rapport à l'embase 102.

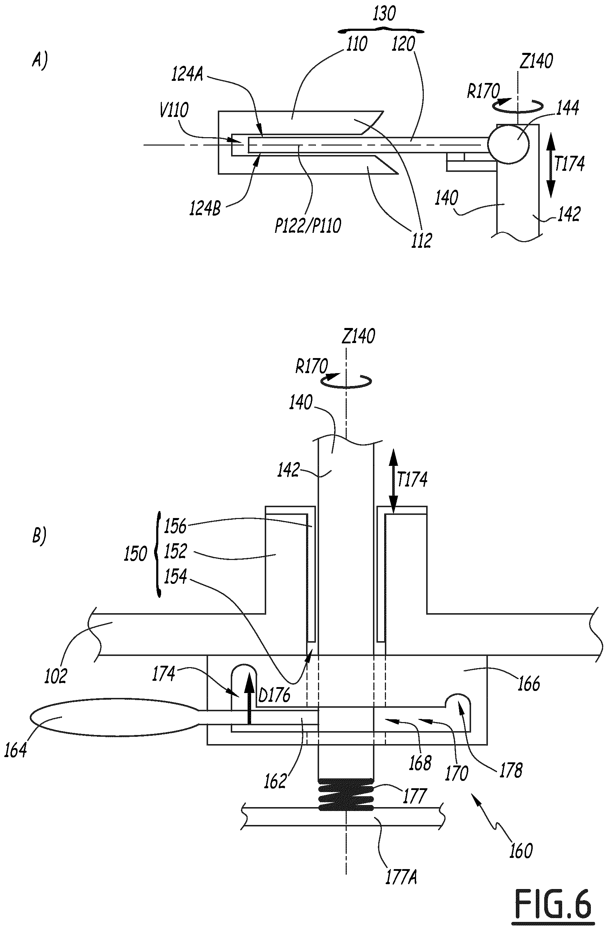

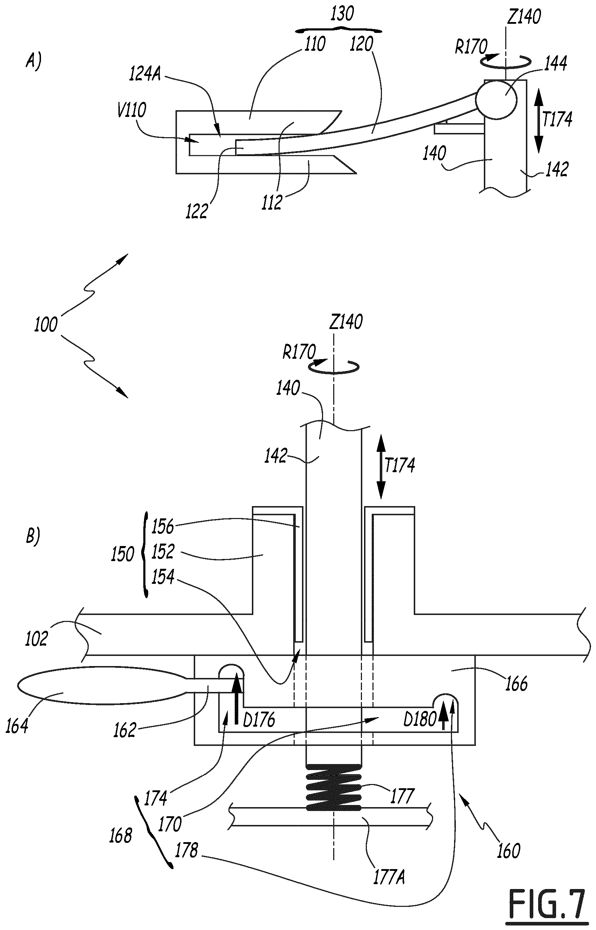

La lumière avant 174 présente un fond 175, le déplacement de l'extrémité avant 172A de la première portion 170 vers le fond 175 de la lumière avant 174 définissant une direction de verrouillage D176. Par extension, le déplacement de la tige 162 dans la lumière avant 174 selon la direction de verrouillage D176 est un mouvement de verrouillage du dispositif de commutation 100, un mouvement selon une direction inverse étant un mouvement de déverrouillage. Le mouvement de verrouillage D174 correspond à l'enchainement des figures 6 et 7. Dans le premier mode de réalisation, la direction de verrouillage D176 est orientée dans le même sens que la direction Z102, c'est-à-dire selon une normale sortante de la face supérieure 104A.

L'organe de commande 160 comprend avantageusement un organe de rappel 177, qui génère un effort de rappel tendant à repousser le support 140 de sa position engagée vers sa position de verrouillage, autrement dit selon la direction de verrouillage D176. L'organe de rappel 177 est ici représenté par un ressort, qui est comprimé contre un élément 177A considéré comme fixe par rapport à l'embase 102. L'élément 177A appartient, par exemple, à un boitier de protection de l'organe de commande 160. Le boitier de protection n'est pas représenté.

Lorsque la tige 162 est en butée contre le fond 175 de la lumière avant 174, le dispositif de commutation 100 est dans une configuration dite de verrouillage. L'organe de rappel 177 tend ainsi à maintenir le dispositif de commutation 100 en configuration de verrouillage, en particulier lorsque le véhicule ferroviaire 10 circule et que le dispositif de commutation 100 est soumis à des vibrations.

Sans intervention externe d'un opérateur, le dispositif de commutation 100 reste ainsi dans la configuration de verrouillage, dans laquelle chaque premier connecteur 110 est électriquement connecté au deuxième connecteur 120 correspondant. Optionnellement, un premier verrou est prévu pour bloquer la tige 162 dans la lumière avant 174, pour éviter les risques de manipulations intempestives et ainsi consigner le dispositif de commutation 100 en configuration de verrouillage. Le premier verrou n'est pas représenté.

Avantageusement, la première portion 170 est relié, par l'extrémité arrière 172B, à une troisième portion de la lumière 168, cette troisième portion étant dite lumière arrière 178. La lumière arrière 178 est ici rectiligne et agencée parallèlement à l'axe principal Z140. La lumière arrière 178 comprend un fond 179, le déplacement de l'extrémité arrière 172B de la première portion 170 vers le fond 179 de la lumière arrière 178 définissant une direction de blocage D180. La direction de blocage D180 est orientée dans le même sens que la direction de verrouillage D176, soit ici dans le même sens que la direction Z102.

Par extension, le déplacement de la tige 162 dans la lumière arrière 178 selon la direction de blocage D180 est un mouvement de blocage pour le support 140, ainsi que pour chaque premier connecteur 110 par rapport au deuxième connecteur 120 correspondant, un mouvement selon une direction inverse étant un mouvement de déblocage. Le mouvement de blocage D180 correspond à l'enchainement des figures 4 et 3. Lorsque la tige 162 est en butée contre le fond 179 de la lumière arrière 178, le dispositif de commutation 100 est dans une configuration bloquée. L'organe de rappel 177 tend avantageusement à maintenir le dispositif de commutation 100 en configuration de blocage. Du fait notamment de la géométrie de la lumière arrière 178, les mouvements de rotation du support 140 autour de l'axe principal Z140 sont empêchés - aux jeux dimensionnels près -.

Sans intervention externe d'un opérateur, le dispositif de commutation 100 reste ainsi dans la configuration de blocage, aucun courant électrique ne pouvant circuler entre les premier et deuxièmes connecteurs 110 et 120. Optionnellement, un deuxième verrou est prévu pour bloquer la tige 162 dans la lumière arrière 178, pour consigner le dispositif de commutation 100 en configuration de blocage. Le deuxième verrou n'est pas représenté.

On décrit à présent une séquence de fonctionnement du dispositif de commutation 100, à l'aide des figures 3 à 7.

Sur la figure 3, le dispositif de commutation 100 est initialement en configuration de blocage, maintenue par l'organe de rappel 177. Le dispositif de commutation 100 est ouvert et verrouillé.

L'utilisateur actionne ensuite l'organe de commande 160, ici en déplaçant la tige 162, à l'aide de la poignée 164 et à l'encontre de l'effort élastique de l'organe de rappel 177, vers l'extrémité arrière 172B de la première portion 170 de la lumière 168, ce qui correspond au mouvement de déblocage du support 140. À la fin du mouvement de déblocage, le dispositif de commutation 100 est dans la configuration reculée, représentée sur la figure 4. Le dispositif de commutation 100 est alors ouvert et déverrouillé. Chaque premier connecteur 110 est alors aligné avec le deuxième connecteur 120 correspondant, tel que représenté sur l'insert A) de la figure 4. Le plan de connexion P110 de chaque premier connecteur 110 est alors confondu avec le plan médian P122 de chaque deuxième connecteur 120 correspondant.

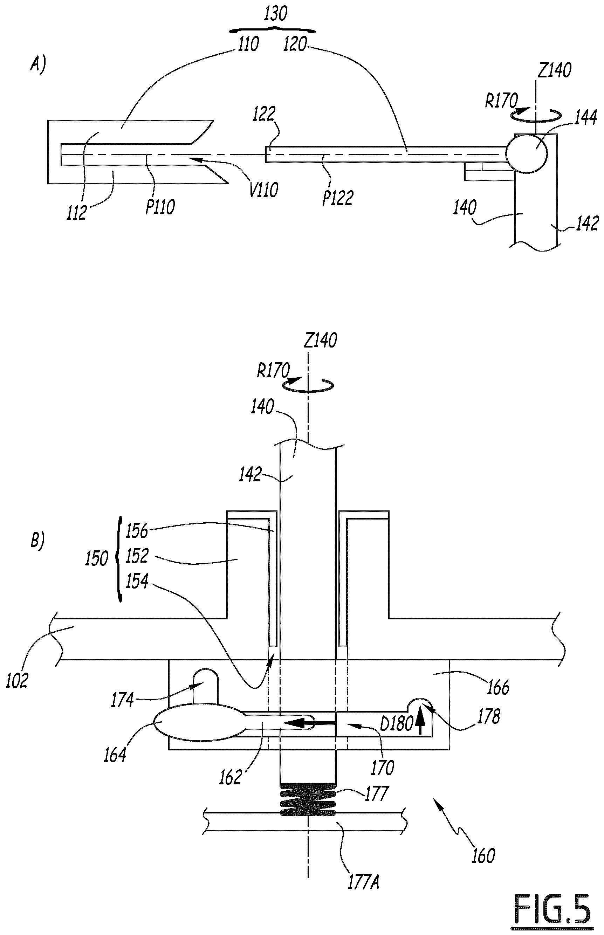

L'utilisateur déplace ensuite la tige 162 dans la première portion 170 de la lumière 168 selon le mouvement d'engagement R170, tel que représenté sur les figures 4 à 6. Au cours du mouvement d'engagement, le support 140 pivote autour de l'axe principal Z140, chaque deuxième connecteur 120 se rapprochant du premier connecteur 110 correspondant, tel que représenté sur la figure 5.

À la fin du mouvement d'engagement, le dispositif de commutation 100 est dans sa configuration engagée, c'est-à-dire que chaque deuxième connecteur 120 est reçu dans le réceptacle V110 correspondant, tel qu'illustré sur l'insert A) de la figure 6. Le dispositif de commutation 100 est alors fermé, mais non verrouillé.

Au cours du mouvement d'engagement, le plan de connexion P110 de chaque premier connecteur 110 reste confondu avec le plan médian P122 du deuxième connecteur 120 correspondant, de manière à faciliter l'insertion de chaque deuxième connecteur 120 dans le réceptacle V110 correspondant. Autrement dit, lorsque le deuxième connecteur 120 est dans une quelconque position intermédiaire entre les positions engagée et reculée et du fait notamment de la géométrie de la première portion 170 de la lumière 168, les mouvements de translation du deuxième connecteur 120 par rapport au premier connecteur 110 parallèlement à l'axe principal Z140 sont empêchés.

De préférence, le réceptacle V110 est suffisamment large pour que, lors de l'insertion de la portion de connexion 122 dans le réceptacle V110 correspondant, la portion de connexion 122 n'est pas pincée entre les deux guides 112. Cela se traduit par le fait que lorsque le deuxième connecteur 120 est déplacé de sa position reculée vers sa position engagée, la force de contact entre le premier connecteur 110 et le deuxième connecteur 120 correspondant est nulle sur au moins une des faces de contact 124A ou 124B du deuxième connecteur 120. Idéalement, la force de contact est nulle sur les deux faces de contact 124A et 124B.

En comparaison des dispositifs de commutation de l'art antérieur, la force d'insertion de chaque deuxième connecteur 120 dans le réceptacle V110 correspondant est réduite, égale par exemple à la force de frottement de la portion de connexion 122 sur l'un des guides 112, voire nulle si un jeu dimensionnel existe entre la portion de connexion 122 et chacun des guides 112.

La portion de connexion 122 n'étant pas pincée, une force de contact entre chaque premier connecteur 110 et les faces de contact 124A et 124B correspondante est elle-aussi minimale, voire nulle. La manoeuvre du support 140 est ainsi facilitée.

À partir de la configuration engagée, l'utilisateur déplace ensuite la tige 162 dans la lumière avant 174 selon la direction de verrouillage D176, pour faire passer le dispositif de commutation 100 dans la configuration de verrouillage. Le dispositif de commutation 100 est alors fermé, et verrouillé.

Au cours du mouvement de verrouillage, alors que le support 140 est déplacé de sa position engagée vers sa position de verrouillage, les mouvements de rotation du support 140 autour de l'axe principal Z140 sont empêchés du fait notamment de la géométrie de la lumière avant 174, de manière que la portion de connexion 122 reste reçue dans le réceptacle V110. Chaque deuxième connecteur 120, en appui sur les guides 112, subit un effort de flexion et se déforme en flexion, tel que représenté schématiquement sur l'insert A) de la figure 7.

Chaque deuxième connecteur 120 est conçu pour que, lorsque le dispositif de commutation 100 est en configuration de verrouillage, la déformation en flexion de chaque deuxième connecteur 120 reste dans le domaine élastique. Ainsi, lorsque chaque deuxième connecteur 120 n'est plus soumis à aucune contrainte externe, chaque deuxième connecteur 120 reprend sa forme initiale. Le matériau de chaque deuxième connecteur 120 est ainsi choisi à la fois pour offrir une bonne conductivité électrique et une bonne élasticité, de préférence un alliage de cuivre.

Le retour élastique de chaque deuxième connecteur 120 génère sur le support 140 une force qui s'oppose à l'effort de rappel généré par l'organe de rappel 177. Si la lumière avant 174 présente une longueur, mesurée selon la direction de blocage D176, trop courte au regard de l'effort de rappel généré par l'organe de rappel 177, on comprend que la tige 162 est repoussé en butée contre le fond 175 de la lumière avant 174. Dans cette situation, la force de contact entre chaque premier connecteur 110 et le deuxième connecteur 120 correspondant est alors reliée à la longueur de la lumière avant 174, autrement dit à une course du mouvement de verrouillage.

Si la lumière avant 174 présente une longueur suffisante au regard de l'effort de rappel générée par l'organe de rappel 177, les forces de retour élastique de chaque deuxième connecteur 120 et l'effort de rappel s'équilibrent. Autrement dit, la force de contact entre chaque premier connecteur 110 et le deuxième connecteur 120 correspondant est reliée à l'effort de rappel généré par l'organe de rappel 177, autrement dit reliée aux caractéristiques de l'organe de rappel 177, notamment sa constante de raideur, sa longueur, etc.

Avantageusement, l'organe de rappel 177 est configuré pour générer un effort de rappel d'intensité réglable par l'opérateur, de manière que l'opérateur puisse ajuster la force de contact entre chaque premier connecteur 110 et le deuxième connecteur 120 correspondant. En variante non représentée, l'organe de rappel comprend un vérin pneumatique ou équivalent, dont une pression interne est réglable par l'opérateur.

On comprend qu'une force de contact entre le premier connecteur 110 et les faces de contact 124A et/ou 124B dépend notamment de l'amplitude du mouvement de verrouillage D176, ainsi que des matériaux choisis pour les premier et deuxièmes connecteurs, leur géométrie, etc. En particulier, dans l'exemple illustré le mouvement de verrouillage présente une course suffisante pour cambrer la portion de connexion 122 au point qu'elle vienne en contact avec les deux guides 112. De préférence, les guides 112 sont élastiquement déformables, de manière à accommoder la flexion de la portion de connexion 122 et à augmenter une surface de contact entre chaque premier connecteur 110 et le deuxième connecteur 120 correspondant.

En variante non illustrée, la course du mouvement de verrouillage est plus réduite, la portion de connexion 122 n'étant alors que plaquée contre le guide 112 supérieur. Même dans ce cas, en position de verrouillage, la force de contact entre chaque premier connecteur 110 et le deuxième connecteur 120 correspondant est supérieure à la force de contact entre chaque premier connecteur 110 et le deuxième connecteur 120 correspondant en position engagée.

La force de contact nécessaire pour avoir une connexion électrique acceptable dépend des spécifications du dispositif de commutation 100, des matériaux utilisés, etc. En se basant sur les principes de l'invention décrits ci-dessus, on peut concevoir un dispositif de commutation 100 qui correspond aux besoins de connexion.

Lorsque chaque deuxième connecteur 120 est en position de verrouillage, la force de contact entre le premier connecteur 110 et les faces de contact 124A et/ou 124B est supérieure à une force de contact entre le premier connecteur 110 et les faces de contact 124A et 124B en position engagée.

Ainsi, grâce à l'invention, la force d'insertion de chaque deuxième connecteur 120 dans le réceptacle V110 est réduite, autrement dit la connexion est facile à établir. Ensuite, la force de contact entre chaque premier connecteur 110 et le deuxième connecteur 120 est augmentée par le mouvement de verrouillage du support 140, de manière à garantir une connexion électrique de bonne qualité.

L'invention est mise en oeuvre grâce à l'organe de commande 160, qui comprend des éléments mécaniques simples à fabriquer et robustes.

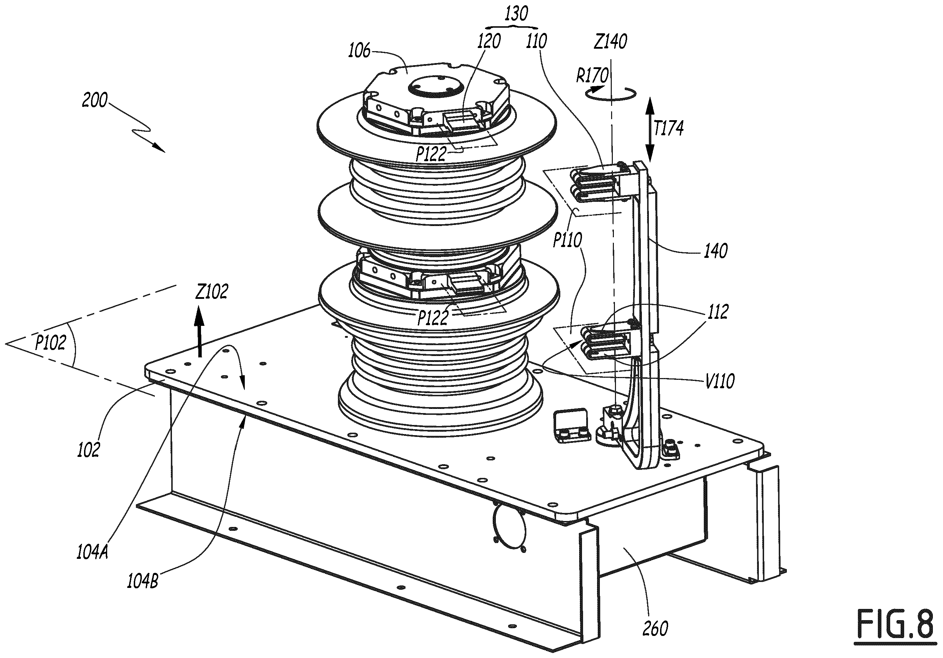

Un dispositif de commutation 200 conforme à un deuxième mode de réalisation de l'invention est représenté en figure 8. Dans le deuxième mode de réalisation, les éléments analogues à ceux du premier mode de réalisation portent les mêmes références et fonctionnent de la même façon. Dans ce qui suit, on décrit principalement les différences entre les premier et deuxième modes de réalisation.

Une des principales différences du deuxième mode de réalisation avec le premier mode est que, dans le deuxième mode de réalisation, les premiers connecteurs 110 sont portés par le support 140, tandis que les deuxièmes connecteurs 120 sont portés par l'appareil électrique 106. Ainsi les deuxièmes connecteurs 120 sont portés par l'embase 102 et sont considérés comme immobiles par rapport à l'embase 102.

Une autre différence est que dans le deuxième mode, les mouvements du support 140 sont pilotés par un actionneur 260, qui est ici automatique. L'actionneur 260 est représenté par un boitier. À titre d'exemple non limitatif, les mouvements du support 140, à savoir le mouvement de rotation R170 autour de l'axe principal Z140 et le mouvement de translation T174 le long de l'axe principal Z140, sont pilotés par des servomoteurs électriques, voire pneumatiques ou équivalent, intégrés à l'actionneur 260.

Dans les modes de réalisation représentés, chaque dispositif de commutation 100 ou 200 comprend deux premiers connecteurs 110, chacun associé à un deuxième connecteur 120 respectif.

En variante non représentée, le dispositif de commutation comprend un seul premier connecteur, associé à un deuxième connecteur. Selon une autre variante, le dispositif de commutation comprend trois premiers connecteurs, voire plus, chacun associé à un deuxième connecteur respectif. Plus généralement, quel que soit le nombre de premier connecteur que comprend le dispositif de commutation, chaque premier connecteur est associé à un deuxième connecteur respectif.

Les modes de réalisation et les variantes mentionnées ci-dessus peuvent être combinés entre eux pour générer de nouveaux modes de réalisation de l'invention.

## Revendications

1. Dispositif de commutation (100), pour un véhicule ferroviaire (10), le dispositif de commutation (100) comprenant :
- un premier connecteur (110), qui comprend deux guides (112) agencés en regard l'un de l'autre de part et d'autre d'un plan de connexion (P110) et ménageant un réceptacle (V110) qui s'étend selon le plan de connexion (P110), et
- un deuxième connecteur (120), associé au premier connecteur (110) et comprenant une portion de connexion (122), qui comprend deux faces de contact (124A, 124B) opposées s'étendant de part et d'autre d'un plan médian (P122) et qui est configurée pour être reçue dans le réceptacle (V110) dans une position engagée du deuxième connecteur (120), dans laquelle chaque face de contact (124A, 124B) est en regard d'un guide (112) respectif et le plan médian (P122) est confondu avec le plan de connexion (P110), le dispositif de commutation (100) étant alors dans une configuration engagée,
- une embase (102), qui s'étend parallèlement au plan de connexion (P110), et
- un support (140), qui est mobile en rotation par rapport à l'embase (102) autour d'un axe principal (Z140) orthogonal au plan de connexion (P110),
- un organe de commande (160 ; 260), configuré pour commander la rotation du support (140) par rapport à l'embase (102),
dans lequel :
- le premier connecteur (110) est porté par l'un des éléments choisis parmi l'embase (102) et le support (140), tandis que le deuxième connecteur (120) est porté par l'autre des éléments parmi le support (140) et l'embase (102),
- le deuxième connecteur (120) est déplaçable par rapport au premier connecteur (110) selon un mouvement relatif d'engagement (R170) parallèle au plan de connexion (P110), entre une position reculée, dans laquelle la portion de connexion (122) est éloignée du réceptacle (V110), et la position engagée,
**caractérisé en ce que** :
- le support (140) est mobile en translation (T174) par rapport à l'embase (102) le long de l'axe principal (Z140),
- l'organe de commande (160 ; 260) est configuré pour commander les mouvements de translation du support (140) par rapport à l'embase (102),
- lorsque le deuxième connecteur (120) est en position engagée, le support (140) est déplaçable en translation par rapport à l'embase (102) selon une direction de verrouillage (D176) parallèle à l'axe principal (Z140), entre la position engagée et une position de verrouillage, dans laquelle chaque face de contact (124A, 124B) est en regard d'un guide (112) respectif et le plan médian (P122) est décalé par rapport au plan de connexion (P110), le dispositif de connexion (100) étant alors dans une configuration de verrouillage, et
- le deuxième connecteur (120) est déformable élastiquement, de manière que, en position de verrouillage, une force de contact entre le premier connecteur (110) et les faces de contact (124A, 124B) est supérieure à une force de contact entre le premier connecteur (110) et les faces de contact (124A, 124B) en position engagée.

2. Dispositif de commutation (100) selon la revendication 1, dans lequel, lorsque le deuxième connecteur (120) est déplacé de sa position reculée vers sa position engagée, la force de contact entre le premier connecteur (110) et le deuxième connecteur (120) correspondant est nulle sur au moins une des faces de contact (124A, 124B) du deuxième connecteur (120).

3. Dispositif de commutation (100) selon l'une quelconque des revendications 1 ou 2, dans lequel, lorsque le support (140) est déplacé de sa position engagée vers sa position de verrouillage, les mouvements de rotation du support (140) autour de l'axe principal (Z140) sont empêchés.

4. Dispositif de commutation (100) selon l'une quelconque des revendications 1 à 3, dans lequel, lorsque le deuxième connecteur (120) est dans une quelconque position intermédiaire entre les positions engagée et reculée, les mouvements de translation du deuxième connecteur (120) par rapport au premier connecteur (110) parallèlement à l'axe principal (Z140) sont empêchés.

5. Dispositif de commutation (100) selon l'une quelconque des revendications 1 à 4, dans lequel, lorsque le support (140) est en position reculée, le deuxième connecteur (120) est déplaçable en translation par rapport au premier connecteur (110), selon une direction de blocage (D180) parallèle à la direction de verrouillage (D176), entre la position reculée et une position de blocage, dans laquelle les mouvements de rotation du support (140) autour de l'axe principal (Z140) sont empêchés.

6. Dispositif de commutation (100) selon revendication 5, dans lequel la direction de blocage (D180) est orientée dans le même sens que la direction de verrouillage (D176).

7. Dispositif de commutation (100) selon l'une quelconque des revendications 1 à 6, comprenant, en outre, un organe de rappel (177), qui génère un effort de rappel tendant à repousser le support (140) selon la direction de verrouillage (D176).

8. Dispositif de commutation (100) selon la revendication 7, dans lequel l'effort de rappel est réglable, de manière à ajuster la force de contact entre chaque premier connecteur (110) et le deuxième connecteur (120) correspondant lorsque le dispositif de commutation (100) est en configuration de verrouillage.

9. Véhicule ferroviaire (10), comprenant une caisse (12) et un dispositif de commutation (100) selon l'une quelconque des revendications 1 à 8, dans lequel le dispositif de commutation (100) est embarqué dans le véhicule ferroviaire (10).

10. Utilisation d'un dispositif de commutation (100) selon l'une quelconque des revendications 1 à 8, comprenant les étapes successives suivantes :
- alors que chaque deuxième connecteur (120) est initialement éloigné du premier connecteur (110) correspondant, faire pivoter (R170) le support (140) autour de l'axe principal (Z140) de manière à insérer chaque deuxième connecteur (120) dans le réceptacle (V110) du premier connecteur (110) correspondant, chaque deuxième connecteur (120) étant alors en position engagée,
- ensuite, déplacer (T174) le support (140) en translation le long de l'axe principal (Z140), de manière à déformer élastiquement chaque deuxième connecteur (120) et à augmenter une pression de contact entre chaque deuxième connecteur (120) et le premier connecteur (110) correspondant.
